**Europäisches Patentamt**

**European Patent Office**

**Office européen des brevets**

(19)

(11) Veröffentlichungsnummer: **0 322 534 B1**

## EUROPÄISCHE PATENTSCHRIFT

(12)

(45) Veröffentlichungstag der Patentschrift:
20.03.91 Patentblatt 91/12

(51) Int. Cl.$^5$: **E04F 10/02, E06B 9/262**

(21) Anmeldenummer: **88117805.7**

(22) Anmeldetag: **26.10.88**

(54) Schrägmarkise.

(30) Priorität: **31.12.87 DE 3744590**

(43) Veröffentlichungstag der Anmeldung:
**05.07.89 Patentblatt 89/27**

(45) Bekanntmachung des Hinweises auf die
Patenterteilung:
**20.03.91 Patentblatt 91/12**

(84) Benannte Vertragsstaaten:
**AT CH DE ES FR IT LI NL**

(56) Entgegenhaltungen:
**EP-A- 0 167 500**

(56) Entgegenhaltungen:
**BE-A- 901 689**
**DE-U- 8 507 015**
**DE-U- 8 524 022**
**US-A- 4 683 933**

(73) Patentinhaber: **Clauss Markisen**
**Bissinger Strasse 6**
**W-7311 Bissingen-Ochsenwang (DE)**

(72) Erfinder: **Clauss, Ulrich**
**Rauberweg 9**
**W-7311 Bissingen-Teck (DE)**

(74) Vertreter: **Rüger, Rudolf, Dr.-Ing. et al**
**Webergasse 3 Postfach 348**
**W-7300 Esslingen/Neckar (DE)**

## Beschreibung

Die Erfindung betrifft eine Schrägmarkise entsprechend den Merkmalen des Oberbegriffs des Anspruches 1.

Solche aus der Praxis bekannten Schrägmarkisen (siehe BE-A-901689) dienen dazu, einen Wintergarten oder eine verglaste Veranda, die zumindest teilweise Glasdach aufweisen, zu beschatten. Dementsprechend weist die Schrägmarkise im ausgefahrenen Zustand einen unter dem Dach mehr oder weniger schräg verlaufenden Bereich auf, der sich bis zu dem Ende des Daches an der verglasten Seitenwand erstreckt. An diesen schrägen Bereich schließt sich bei voll ausgefahrener Markise ein vertikaler Bereich an, der es gestattet, auch die verglaste Seitenwand mehr oder weniger mit Hilfe des Raffvorhangs zu verschließen.

Bei diesen bekannten Schrägmarkisen werden wenigstens zwei, häufig mehr als zwei Laufschienen benötigt, um ein sichtbar störendes Durchhängen der Tragschienen im schrägen Bereich zu vermeiden. Diese Laufschienen folgen dem Raum, d.h. sie verlaufen unterhalb des Daches schräg, um dann vor der Seitenwand in einem Bogen vertikal nach unten abzusteigen. Der Krümmungsradius des Bogens muß verhältnismäßig groß gewählt werden, damit die Laufrollen, an denen die Tragschienen aufgehängt sind, mit nicht allzu großer Kraft aus dem vertikalen Bereich der Laufschienen in den schräg verlaufenden Bereich gebracht werden können, wenn die Schrägmarkise eingefahren wird.

Sowohl der Bogen in der Laufschienen als auch der vertikale Abschnitt der Laufschienen ist architektonisch und optisch nicht besonders ansprechend, denn er befindet sich bei eingefahrener Schrägmarkise ständig im Blickfeld, was für die unter der Decke bzw. dem Dach verlaufenden Schienen nicht zutrifft. Neben der optischen Beschränkung weisen die bekannten Schrägmarkisen auch installationstechnische Nachteile auf, insofern, als die Laufschienen mit dem schräg verlaufenden, dem Bogen und dem vertikal verlaufenden Abschnitt an das Raumprofil angepaßt werden müssen. Das einfache Ablängen von Meterware kommt deswegen nicht in Frage. Selbst wenn die Laufschiene aus einzelnen Stücken zusammengesetzt wird, ist die Anbringung wegen der einzelnen Abschnitte verhältnismäßig aufwendig. Dies nicht zuletzt deswegen, weil zumindest die vertikal verlaufenden Abschnitte der Laufschienen auf die Pfeiler in der verglasten Seigenwand ausgerichtet werden müssen, um nicht mit den Fensterflächen zu kollidieren. Die bekannten Schrägmarkisen sind deswegen auch nicht verwendbar in Fällen, in denen in der verglasten Seitenwand große Glasschiebetüren vorgesehen sind.

Ausgehend hiervon ist es deswegen Aufgabe der Erfindung, eine leichter zu installierende Schrägmarkise zu schaffen, die im eingezogenen Zustand keine unmittelbar in das Blickfeld fallende Teile aufweist.

Diese Aufgabe wird erfindungsgemäß durch die Schrägmarkise mit den Merkmalen des Anspruches 1 gelöst.

Hierbei verhindert die Verriegelungseinrichtung ein Ablassen des vertikalen Teils des Raffvorhangs, wenn die Markise über den schrägen Bereich ausgefahren wird. Insofern ersetzt die Verriegelungseinrichtung den bei den bekannten Markisen vorgesehenen vertikalen Teil der Laufschienen sowie die in diesem Bereich befindlichen, in Laufrollen geführten Querschienen. Beim Ausfahren der Schrägmarkise hält nämlich die Verriegelungseinrichtung das zugehörige Zugmittel fest und damit den vertikalen Abschnitt des Raffvorhangs im gerafften Zustand. Erst wenn der schräg verlaufende Bereich vollständig ausgefahren ist und die Verriegelungseinrichtung an die Auslöseeinrichtung anstößt, wird das zugehörige Zugmittel frei und der vertikale Teil des Raffvorgangs kann abgesenkt werden. Umgekehrt wird beim Einfahren der Schrägmarkise von dem Zugmittel wegen der geöffneten Verriegelungseinrichtung zunächst der vertikale Teil des Raffvorhangs hochgezogen, ehe das Einfahren längs der mehr oder weniger schräg verlaufenden Laufschiene erfolgt. Die vertikalen Abschnitte der Laufschienen werden deshalb nicht mehr zur Steuerung des Bewegungsablaufes beim Ein- und Ausfahren des Raffvorhangs benötigt. Sie können deswegen entfallen und es bleiben im unmittelbaren Blickfeld bei eingefahrener Schrägmarkise keine sichtbaren Teile zurück. Wegen des Wegfalls der vertikalen Laufschienenabschnitte ist auch die Montage wesentlich vereinfacht, da die Anpassung nur noch darin besteht, entsprechend der Deckenlänge zugemessene Laufschienen anzubringen. Auch entfällt der weite Bogen in den Laufschienen, weshalb die neue Markise einen ziemlich abrupten Übergang zwischen dem schrägen und dem vertikalen Bereich ermöglicht und somit besser der Raumkontur folgen kann.

Ein sehr gleichmäßiges und verkantungsfreies Ein- und Ausfahren der Schrägmarkise wird erreicht, wenn wenigstens zwei im Bereich der seitlichen Kanten des Raffvorhangs verlaufende Zugmittel sowie zwei Verriegelungseinrichtungen vorgesehen sind. Ein Schiefziehen des Raffvorhangs ist dadurch ausgeschlossen. Selbst wenn durch Erschütterungen am Raffvorhang das eine Zugmittel in der Verriegelungseinrichtung, die bevorzugt eine reibschlüssige Verriegelungseinrichtung ist, ein Stück weit durchgerutscht sein sollte, so daß die Vorderkante des Raffvorhangs schief hängt, wird durch Ein- und Ausfahren das Schiefhängen wieder beseitigt. Die reibschlüssig wirkende Verriegelungseinrichtung hat dabei den Vorzug, daß sie an jeder Stelle des Zugmittels, das vorzugsweise bandförmig ist, greifen kann. Außerdem ist hierbei der Auslöse- und Verriegelungshub sehr klein.

Wenn bei der reibschlüssig wirkenden Verriegelungseinrichtung die beweglich gehalterte Klemmfläche an einem an einer Lagerstelle schwenkbar gelagerten Hebel sitzt, wird die Auslösung sehr einfach, insofern, als ein Anschlag genügt, der mit dem Hebel zusammenwirkt, um ihn aus der Verriegelungsstellung für das Zugmittel herauszuschwenken. Außerdem führt die Anordnung der beweglichen Klemmstelle oberhalb der Lagerstelle in Verbindung mit einer ortsfesten Klemmfläche, die aus der Sicht des rückwärtigen Endes der Laufschiene gesehen, hinter der Lagerstelle liegt, zu einer selbstverstärkenden oder Servowirkung beim Einklemmen des Zugmittels, denn das an dem Zugmittel wirkende Gewicht des hochgerafften vertikalen Abschnittes des Raffvorhangs nimmt die schwenkbare Klemmfläche im Sinne einer verstärkten Klemmwirkung mit. Wenn also das Zugmittel in Richtung eines Ausfahrens der Schrägmarkise betätigt wird, hält das Gewicht des aufgerafften vertikalen Teils des Raffvorhangs die Verriegelungseinrichtung in der das Zugmittel klemmenden Stellung. Beim Einfahren der Schrägmarkise wird dagegen die Klemmwirkung gelöst, so daß immer zuverlässig das Anheben des hochgerafften vertikalen Teils des Raffvorhangs gewährleistet ist.

Durch die Lage der Verriegelungseinrichtungen längs dem Raffvorhang wird festgelegt, an welcher Stelle gegebenenfalls der Raffvorhang abgesenkt wird. Es ist auf diese Weise durchaus möglich, den vertikalen Teil der Schrägmarkise in einem deutlichen Abstand zu der Fensterfläche frei im Raum abzusenken, ohne daß hierzu störende Laufschienen erforderlich wären.

Für die Anbringung der freien Enden der Zugmittel bestehen grundsätzlich zwei Möglichkeiten. Entweder wird das Zugmittel mit dem freien Ende unmittelbar an der Vorderkante des Raffvorhangs angebracht oder das Zugmittel läuft ähnlich einem Flaschenzug, wobei das vordere Ende des Zugmittels an der Tragschiene mit der Verriegelungseinrichtung angebracht ist, um von dort aus zu der Vorderkante des Raffvorhangs zu laufen, um dann erneut längs dem vertikalen Bereich des Raffvorhangs zu der Tragschiene mit der Verriegelungseinrichtung zurückzulaufen, ehe sich das Zugmittel in Richtung auf die Betätigungseinrichtung erstreckt.

Mit Hilfe der ersten Anordnung des Zugmittels ist ein sehr schnelles Auf- und Abfahren des vertikalen Abschnittes zu erreichen, denn dieser Bereich läuft bei konstanter Geschwindigkeit des Zugmittels mit dessen Geschwindigkeit, also genau so schnell wie der schräg verlaufende Bereich. Dafür hängt der hochgeraffte Abschnitt entsprechend der Staffelung der beim Raffen entstehenden Falten gegebenenfalls tiefer als die Falter, die der schräg verlaufende Bereich im eingefahrenen Zustand bildet, wenn die Abstände zwischen den Tragschienen gleich dem Abstand der Führungsglieder des vertikalen Teiles sind. Bei nicht allzu großen Deckenhöhen ist hier jedoch eine einfache Anpassung möglich.

Wenn es dagegen gewünscht ist, daß die Falten, die der Raffvorhang bei seinem aufgezogenen vertikalen Teil bildet, genau so tief hängen wie die Falten im eingefahrenen Schrägbereich, kann mit Vorteil die zweite Anbringungsmöglichkeit des Zugmittels gewählt werden. Allerdings läuft in diesem Falle die Unterkante des Raffvorhangs mit der halben Geschwindigkeit des Zugmittels, also entsprechend langsam.

Um ein Durchhängen der Falten oder Schlaufen des vertikalen Abschnittes im gerafften Zustand zu verhindern, sind vorzugsweise auch hier Tragschienen vorgesehen, die jedoch frei von Laufrollen sind.

Für den Fall, daß das Eigengewicht des Raffvorhangs samt den Tragschienen im Vergleich zu der Schräge der Laufschienen zu klein ist, kann das Laufverhalten und die Betriebssicherheit dadurch verbessert werden, daß der im Übergang zwischen dem schräg verlaufenden Bereich und dem vertikalen Bereich befindliche Tragschiene ein Gewicht zugeordnet ist. Dieses Gewicht kann auch von der Tragschiene selbst gebildet sein.

Um sicherzustellen, daß sich in jedem Falle die im Übergang zwischen dem schräg verlaufenden Bereich und dem vertikalen Bereich befindliche Tragschiene erst in Bewegung setzt, wenn der vertikale Bereich vollständig hochgerafft ist, kann in dem vorderen Bereich wenigstens einer der Laufschienen, vorzugsweise in den vorderen Bereichen sämtlicher Laufschienen, und zwar jeweils auf gleicher Höhe, eine Halteeinrichtung angeordnet sein, um auf diese Tragschiene beim Einfahren eine Haltekraft auszuüben. Die Halteeinrichtung kann je nach konstruktiver Ausgestaltung mit den Rollen der Tragschiene, der Verriegelungseinrichtung, oder, falls vorhanden, einem Laufwagen zusammenwirken. Bei der Haltevorrichtung kommt es lediglich darauf an, daß sie nur in einer Betätigungsrichtung eine nennenswerte Haltekraft zu erzeugen vermag. So kann die Halteeinrichtung von einem nach abwärts gekrümmten Abschnitt der Laufschienen gebildet sein, in den die Rollen aufgrund des Eigengewichtes des Raffvorhangs einlaufen, während zum Herausziehen der Rollen aus dem Bogen eine nennenswerte Betätigungskraft erforderlich ist. Die Halteeinrichtung kann auch von einem schwenkbaren Haken gebildet sein, der mit den Laufrollen oder den sie lagernden Teilen zusammenwirkt. Bei der ersten Ausführungsform sind keine zusätzlichen bewegten Teile erforderlich, während die andere Ausführungsform ohne besondere Gestaltung der Laufschienen das Auslangen findet. In jedem Falle bewirkt die Haltevorrichtung zwangsweise ein vollständiges Aufziehen des vertikalen Teils des Raffvorhangs, ehe ein Einfahren auch des schräg verlaufenden Abschnittes beginnt.

In der Zeichnung ist ein Ausführungsbeispiel des Gegenstandes der Erfindung dargestellt. Es zeigen :

Fig. 1 eine ausgefahrene Schrägmarkise gemäß der Erfindung in einer perspektivischen Ansicht von oben,

Fig. 2 einen Schnitt durch die Schrägmarkise nach Fig. 1 im Bereich der Tragschiene, die sich am Übergang zwischen dem schrägen in den vertikalen Bereich befindet, bei geöffneter Verriegelungseinrichtung,

Fig. 3 die Schrägmarkise nach Fig. 1 in einer Darstellung ähnlich Fig. 2, wobei sich jedoch die Verriegelungseinrichtung noch im geschlossenen Zustand befindet,

Fig. 4 einen Laufwagen für eine Schrägmarkise gemäß der Erfindung, bei der die Falten des hochgerafften vertikalen Bereiches in derselben Höhe hängen,

Fig. 5 bis 7 unterschiedliche Zustände einer Schrägmarkise mit dem Laufwagen nach Fig. 4 und

Fig. 8 eine andere Ausführungsform der Haltevorrichtung für die Schrägmarkise nach Fig. 1.

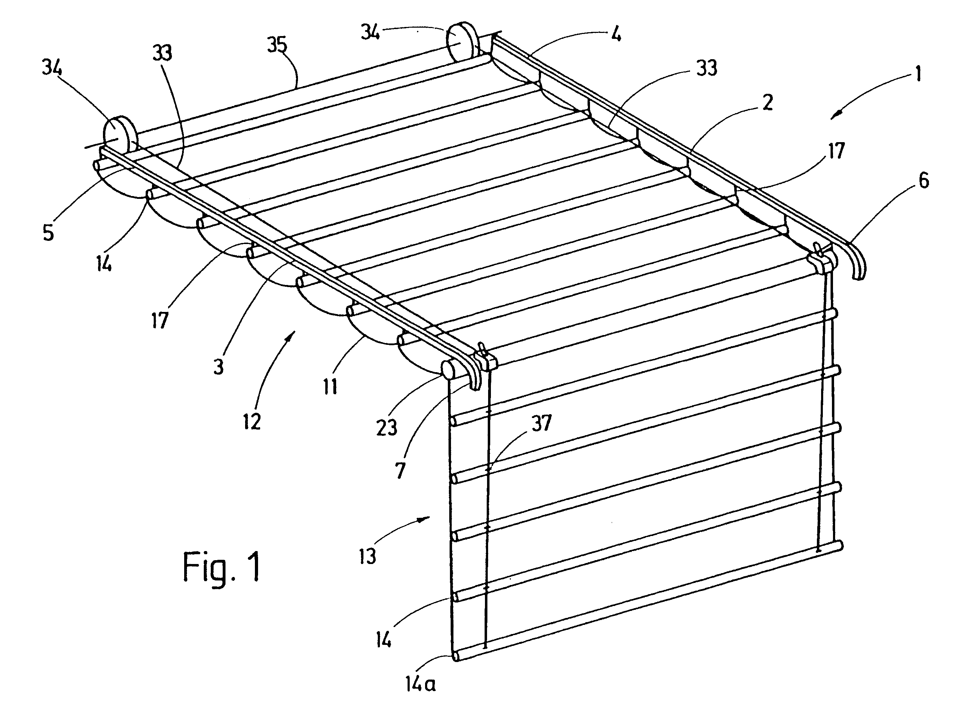

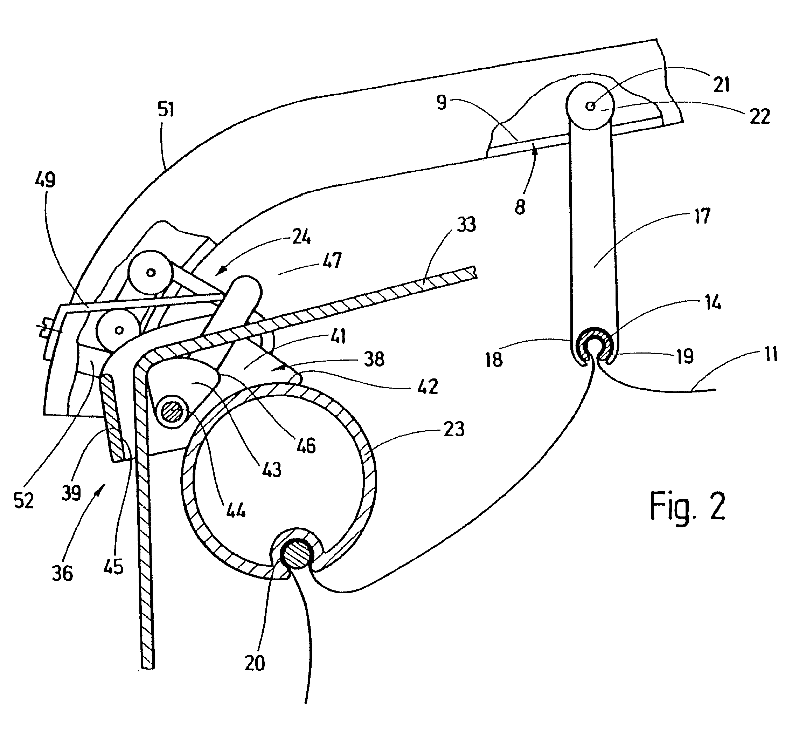

In Fig. 1 ist eine Schrägmarkise 1 in einer perspektivischen Ansicht von oben gezeigt. Die Gebäudeteile, die die Schrägmarkise 1 umgeben sowie die Befestigungseinrichtungen, die die Schrägmarkise 1 mit den Gebäudeteilen verbinden, sind der Übersichtlichkeit halber nicht dargestellt, da sie allgemein bekannt und nicht Gegenstand der Erfindung sind. Die Schrägmarkise 1 weist zwei parallel und im Abstand voneinander angebrachte Laufschienen 2 und 3 auf, die, ausgehend von ihren hinteren Enden 4 und 5 in Richtung auf ihre vorderen Enden 6 und 7 schräg nach unten verlaufen. Die Laufschienen 2 und 3 haben ein im Querschnitt C-förmiges Profil, das einen nach unten weisenden Schlitz 8 (siehe Fig. 2) bildet, neben dem dem sich im wesentlichen ebene Laufflansche 9 erstrecken.

Unterhalb der beiden Laufschienen 2 und 3 befindet sich ein Raffvorhang 11 aus einem Tuch oder einer Folienbahn. Im ausgefahrenen Zustand bildet der Raffvorhang 11 deutlich erkennbar zwei Bereiche 12 und 13, von denen sich der eine schräg verlaufend parallel zu einer Ebene erstreckt, die durch die Laufschienen 2 und 3 definiert ist ; dieser Abschnitt des Raffvorhangs 11 wird im folgenden vereinfachend als Schrägbereich bezeichnet. Der andere Abschnitt 13 hängt bei ausgefahrener Schrägmarkise 1 im Bereich der vorderen Enden 6 und 7 der Laufschienen 2 und 3 senkrecht nach unten, weshalb dieser Teil des Raffvorhangs 11 vereinfachend als Senkrechtbereich bezeichnet ist.

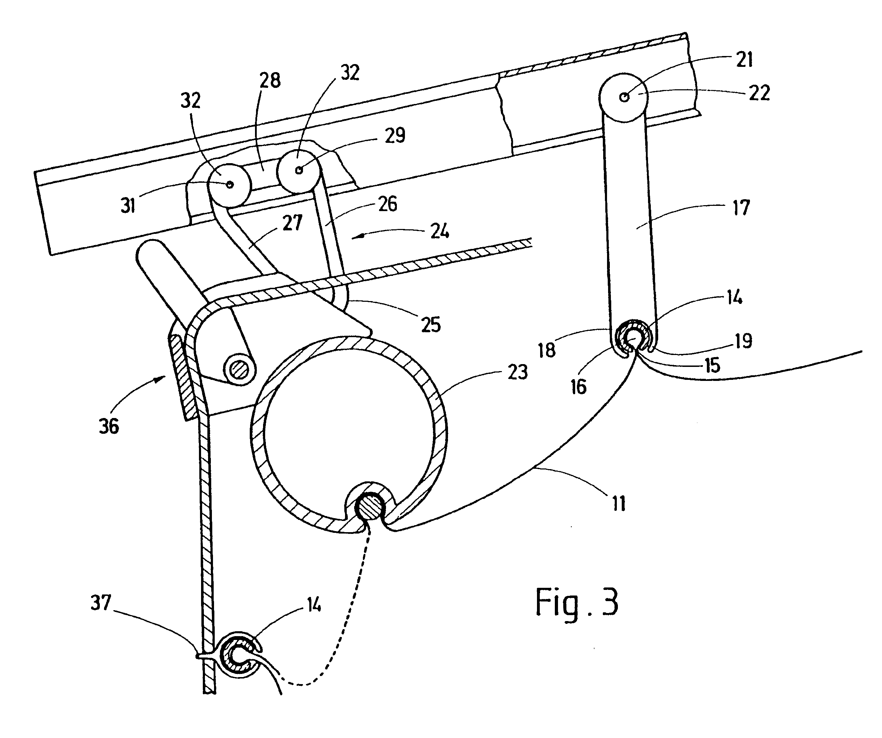

Über seine gesamte Länge ist der Raffvorhang 11 mit einer Vielzahl von rohrförmigen Tragschienen 14 verbunden, die sich über die gesamte Breite des Raffvorhangs 11 erstrecken und an diesem über ihre ganze Länge befestigt sind. Die Tragschienen 14 sollen ein unkontrolliertes Durchhängen des Raffvorhangs 11 verhindern und für ein ordnungsgemäßes Zusammenfalten beim Einfahren der Schrägmarkise 1 dienen. Sie sind deswegen, wie die Fig. 2 und 3 zeigen, bei 15 längsgeschlitzt und auf eine in dem Raffvorhang 11 eingenähte Wulst 16 aufgeschoben. Alle Tragschienen 14 haben, bezogen auf die Länge des Raffvorhangs 11, den gleichen Abstand voneinander und verlaufen parallel zueinander bzw. zu der Vorder- und Hinterkante des Raffvorhangs 11.

Auf den Tragschienen 14 des Schrägbereiches 12 sind schienenförmige längliche Stege 17 aufgesetzt, deren Dicke der Weite des Schlitzes 8 entspricht und an deren unteren Ende, wie die Fig. 2 und 3 erkennen lassen, zwei aufeinander zu gebogene Schenkel 18 und 19 angeformt sind, die die Tragschiene 14 teilweise umgreifen. Am oberen Ende des Steges sind auf einer gemeinsamen Achse 21 beidseits jedes Steges 17 zwei Rollen 22 drehbar gelagert, die auf den beiden Flanschen 9 im Inneren der Laufschienen 2 bzw. 3 laufen.

Lediglich eine der Tragschienen weist einen von der Gestalt der Tragschienen 14 abweichende Ausführungsform auf, nämlich eine im Übergang zwischen dem Schrägund dem Vertikalbereich 12, 13 befindliche Tragschiene 23. Da diese gleichzeitig als Gewicht dient, um ein besseres Ausfahren der Schrägmarkise 1 zu gewährleisten, hat sie einen größeren Durchmesser und/oder besteht aus einem schwereren Material. Auch an dieser Tragschiene 23 ist der Raffvorhang 11 mit Hilfe einer in dem Außenumfang der rohrförmigen Tragschiene 23 eingearbeiteten Keep 20 über seine gesamte Breite befestigt. Die Tragschiene 23 ist an ihren beiden Enden im Laufwägen 24 eingehängt, deren Rahmen 25 zwei von der Tragschiene 23 ausgehend divergierende Schenkel 26 und 27 aufweist, die an ihrem oberen freien Ende im Inneren der Laufschienen 2 bzw. 3 durch einen Querbalken 28 miteinander einstückig verbunden sind. An dem Querbalken sind auf zwei zueinander parallelen Achsen 29 und 31 insgesamt vier Laufrollen 32 drehbar gelagert, die paarweise auf den Achsen 29 und 31 sitzen. Auch diese Rollen 32 laufen im Inneren der Laufschienen 2 und 3 auf den Flanschen 9.

Die Betätigung des Raffvorhangs 11 und damit der Schrägmarkise 1 geschieht mittels zweier Zuggurte 33, die mit ihrem hinteren Ende an Wickelrollen 34 befestigt sind, die drehfest auf einer gemeinsamen Welle 35 sitzen. Die Welle 35 ist in bekannter Weise an der Gebäudestruktur drehbar gelagert und kann durch einen nicht veranschaulichten Antriebsmotor oder eine Handkurbel in Umdrehungen versetzt werden, um die Zuggurte 33 wahlweise auf die beiden Wickelrollen 34 auf- bzw. von diesen abzuwickeln. Ausgehend von den Rollen 34 erstrecken sich die Zuggurte 33 oberhalb des Schrägbereiches 12 unmittelbar neben der Innenseite, d.h. den aufeinander zugekehrten Seiten der Stege 17 in Richtung auf die Tragschiene 23. An der Tragschiene 23 sind die beiden Zuggurte 33 durch eine Verriegelungseinrichtung 36 hindurchgeführt und laufen von dort hinter dem Senkrechtbereich 13, d.h. auf der Seite des Raffvorhangs 11, auf der sich die Tragschienen 14 des Senkrechtbereiches 13 befinden. Die Zuggurte 33 laufen am Senkrechtbereich 13 bis zu der untersten Tragschiene 14a, an der sie endseits befestigt sind.

Die Tragschienen 14 des Senkrechtbereiches 13 sind auf ihrer Rückseite mit Führungsösen 37 versehen, durch die die Zuggurte 33 hindurchlaufen. Da der Senkrechtbereich 13 frei pendelnd nach unten hängt, und für ihn auch keine Laufschienen vorgesehen sind, sind die Tragschienen 14 des Senkrechtbereiches nicht mit irgendwelchen Laufeinrichtungen versehen.

Die Verriegelungseinrichtung 36 hat die Aufgabe, beim Ausfahren der Schrägmarkise 1 den Senkrechtbereich 13 sich erst dann entfalten zu lassen, wenn der Schrägbereich 12 voll ausgefahren ist. Zu diesem Zweck wird der entsprechende Zuggurt 33 während des Ausfahrens des Schrägbereiches 13 geklemmt gehalten und erst anschließend freigegeben, damit sich der Senkrechtbereich 13 entfalten kann.

Die Verriegelungseinrichtung 36, die in den Fig. 2 und 3 quer zu der Achse der Tragschiene 23 geschnitten veranschaulicht ist, besteht aus zwei parallel zueinander verlaufenden Flanschen 38, die eine glatte aufeinander zuweisende Innenfläche tragen und an ihrer Rückseite durch einen etwa senkrecht verlaufenden Steg 39 einstückig miteinander verbunden sind. Wegen der geschnittenen Darstellung ist von den Flanschen 38 lediglich der eine sichtbar. Ihr Abstand voneinander entspricht der Breite des zwischen den beiden Flanschen 38 hindurchverlaufenden Zuggurtes 33. An ihrem von dem Steg 39 abliegenden vorderen Ende 41 sind die beiden Flansche 38 auf der Außenumfangsfläche des Tragrohres 23 durch Nieten, Schrauben oder eine Klebverbindung befestigt. Um hier eine großflächige Verbindung zu bekommen, sind die Flansche 38 im Bereich ihres vorderen Endes 41 mit einer bogenförmigen Ausnehmung 42 versehen, deren Radius an den Außendurchmesser der Tragschiene 23 angepaßt ist.

Zwischen den beiden Flanschen 38 ist ein etwa sektorförmiger Klemmnocken 43 auf einer Achse 44 schwenkbar gelagert, die in den beiden Flanschen 38 gehaltert ist. Die Achse 44 verläuft mit Abstand vor der Innenseite des Steges 39, die eine ortsfeste Klemmfläche 45 bildet. Sie wirkt mit einer radial außen liegenden Kreisbogenfläche 46 zusammen, die auf dem Klemmnocken 43 ausgebildet ist und exzentrisch zu der Achse 44 liegt. Einstückig mit dem Klemmnocken 43 ist ein einarmiger Hebel 47, der nach oben zwischen den beiden Flanschen 38 hervorsteht. Er dient der Betätigung des Klemmnockens 43 nach dem Ausfahren des Schrägbereiches 12 und wirkt mit einem Betätigungsfinger 49 zusammen, der an dem vorderen Ende 6 bzw. 7 jeder der Laufschienen 2 und 3 angebracht ist. Der Zuggurt 33 verläuft in der Verriegelungseinrichtung 36 oberhalb der Achse 44 und zwischen der feststehenden Klemmfläche 45 sowie dem Klemmnocken 43 hindurch nach unten.

Die genaue Ausbildung der Verriegelungseinrichtung 36 ergibt sich aus der nachfolgenden Funktionsbeschreibung anhand der Fig. 1 bis 3. Zur Erläuterung der Funktionsweise sei angenommen, der Raffvorhang 11 ist zusammengerafft, d.h. die Schrägmarkise 1 ist eingefahren. In diesem Zustand sind die beiden Zuggurte 33 soweit als möglich auf die Wickelrollen 34 aufgewickelt. Die Tragschienen 14 hängen hierbei dicht an dicht seitlich nebeneinander unterhalb der Laufschienen 2 und 3 an deren hinterem Ende 4 bzw. 5. Da die Zuggurte 33 unter Spannung stehen, sind auch die Tragschienen 14 des Senkrechtbereiches 13 vollständig bis an die Tragschiene 23 heran aufgezogen. Der Raffvorhang 11 wird deswegen zwischen den benachbarten Tragschienen 14 bzw. 23 in tiefen Falten herunterhängen.

Vom vorhergehenden Einfahren der Schrägmarkise 1 wird der Klemmnocken 23, der sich oberhalb der Schwenkachse 44 befindet, in die in Fig. 2 gezeigte Stellung gebracht sein, denn der Zuggurt 33 läuft zwischen der ortsfesten Klemmfläche 45 und der Schwenkachse 44 durch, weshalb eine an dem horizontal verlaufenden Teil des Zuggurtes 33 angreifende Zugkraft, die ihn, bezogen auf Fig. 2 nach rechts sich bewegen läßt, den Klemmnocken 43 im Uhrzeigersinne mitnehmen wird und soweit als möglich im Uhrzeigersinne verschwenken wird. Hierbei hat sich die Klemmfläche 46 von der ortsfesten Klemmfläche 45 weitgehend entfernt.

Werden, ausgehend von dieser Betriebsstellung die beiden Zuggurte 33 synchron von den Aufwickelrollen 34 durch Ingangsetzen der Welle 35 abgewickelt, wird, noch bevor sich die Rollen 22, mit denen die Tragschienen 14 des Schrägbereiches 12 gelagert sind, in Bewegung setzen, der Senkrechtbereich 13 bestrebt sein, abzufahren. Dies ruft ein begrenztes Durchlaufen der Zuggurte 33 durch die Verriegelungseinrichtungen 36 hervor, d.h. der Zuggurt 33 bewegt sich, bezogen auf Fig. 3, von rechts oben nach links unten. Hierbei wird er, da er auf der beweglichen Klemmfläche 36 aufliegt, aufgrund der Reibkraft den Klemmnocken 43 im Uhrzeigersinne mitverschwenken, und zwar solange, bis die an dem Zuggurt 33 nach unten ziehende Kraft den Klemmnocken 43 hinreichend verklemmt hat. Der Zuggurt 33 ist dann zwischen der beweglichen Klemmfläche 46 und der ortsfesten Klemmfläche 45 eingeklemmt, wobei die exzentrische Lage der beweglichen Klemmfläche 46 bei einer Verstärkung der nach unten wirkenden Kraft lediglich die Klemmwirkung vergrößert, jedoch der Zuggurt 33 nicht durchrutschen kann.

Wenn dieser Zustand erreicht ist, der nach wenigen Zentimetern Bewegung der zugehörigen Zuggurte 33 eintreten wird, ist die Abwärtsbewegung des Senkrechtbereiches 13 zunächst zuverlässig gestoppt. Das weitere Abwickeln der Zuggurte 33 von den Wickelrollen 34 wird deswegen zwangsläufig zu einem Ausfahren des Schrägbereiches 12 führen, während der Senkrechtbereich 13 keine Veränderung erfährt. Die die Tragschienen 14 des Schrägbereiches 12 tragenden Stege 17 werden in den Laufschienen 2 und 3 in Richtung auf deren vordere Enden 6 und 7 laufen. Schließlich werden, wenn das Abwickeln der Zuggurte 33 fortgesetzt wird, die Laufwägen 24 in ein zugehöriges, nach unten weisendes Bogenstück 51 einlaufen, das an beiden Laufschienen 2 und 3 an deren vorderem Ende 6 und 7 ausgebildet ist. Ein am Ende des Bogens 51 sitzender Anschlag 52 verhindert, daß der zugehörige Laufwagen 24 aus dem Bogen 51 herausfällt. Beim Einlaufen des Laufwagens 24 in den Bogen 51 kommt der Betätigungshebel 47, der zunächst die in Fig. 3 gezeigte, nach links verschwenkte Stellung eingenommen hat, mit dem Betätigungsfinger 49 in Eingriff, um eine Verschwenkung des Hebels 47 und damit des Klemmnockens 43 im Uhrzeigersinne entgegen der Wirkung des Zuggurtes 33 hervorzurufen. Zu diesem Zweck ist die Tragschiene 23 gegebenenfalls mit einem Zusatzgewicht versehen, damit die Kraft, mit der der Laufwagen 24 bzw. die Tragschiene 23 in den Bogen 51 einläuft, ausreicht, um den Klemmnocken 43 entgegen der Zugkraftwirkung des Zuggurtes 33 zu verschwenken. Nachdem hierdurch die Verriegelungseinrichtung 36 geöffnet wurde, kann der Zuggurt 33 frei zwischen der ortsfesten Klemmfläche 45 und dem von der ortsfesten Klemmfläche 45 wegverschwenkten Klemmnocken 43 hindurchgleiten, wenn er weiter von der zugehörigen Wickelrolle 34 abgewickelt wird. Hierdurch wird sich die an den freien unteren Enden der beiden Zuggurte 33 angebrachte Tragschiene 14a entsprechend allmählich absenken, um den Senkrechtbereich 13 zu entfalten.

Die beiden an den Enden der Tragschiene 23 sitzenden Verriegelungseinrichtungen 36 verhindern, wie dargelegt, ein vorzeitiges Entfalten des Senkrechtbereiches 13, ehe der Schrägbereich 12 vollständig ausgefahren ist, d.h. die Tragschiene 23 an den vorderen Enden 6, 7 der Laufschienen 2, 3 angekommen ist.

Die beiden Bögen 51 dienen andererseits gleichzeitig als Haltevorrichtung für die darin laufenden Wägen 24, um sicherzustellen, daß beim Einfahren der Schrägmarkise 1 zunächst der Senkrechtbereich 13 eingeholt wird, ehe der Schrägbereich 12 beginnt, sich zusammenzufalten. Wird nämlich die Welle 35 zusammen mit den Wickelrollen 34 im Sinne eines Aufwickelns der beiden Zuggurte 33 in Bewegung gesetzt, so ist die von den Bögen 51 auf die beiden Laufwägen 24 ausgeübte Kraft größer als die Mitnahmekraft der durch die Verriegelungseinrichtungen 36 hindurch und damit um die Tragschiene 23 herumgezogenen Zuggurte 33. Die Tragschiene 23 wird deswegen beim Einziehen der Zuggurte 33 im wesentlichen in Ruhe bleiben und die beiden Zuggurte 33 werden zwischen der ortsfesten Klemmfläche 45 und dem entsprechend Fig. 2 geschwenkten Klemmnocken 43 nach rechts in Richtung auf die Wickelrollen 34 laufen. Da dabei das untere Ende der Zuggurte 33 angehoben wird, wird auch die untere Tragschiene 14a angehoben, die in der Folge die darüber befindlichen Tragschienen 14 des Senkrechtbereiches 13 mitnehmen wird, die mit ihren Führungsösen 37 an den beiden Zuggurten 33 gefesselt sind. Erst, wenn der Senkrechtbereich 13 vollständig eingefahren ist, kann die Zugkraft in den beiden Zuggurten 33 so weit ansteigen, daß sie in der Lage ist, die beiden Laufwägen 34, die den Bögen 51 aufgrund der Schwerkraft gegen den Anschlag 52 gehalten sind, herauszuziehen.

Beim weiteren Einfahren der Zuggurte 33 wird die Tragschiene 23 die Tragschienen 14 des Schrägbereiches 12 nacheinander in Richtung auf die hinteren Enden 4, 5 der Laufschienen 2, 3 vor sich herschieben. Die Verriegelungseinrichtung 36 bleibt in der in Fig. 2 gezeigten Stellung und würde erst bei einer Bewegungsumkehr der Zuggurte 33 die in Fig. 3 gezeigte Stellung, wie oben erläutert, einnehmen.

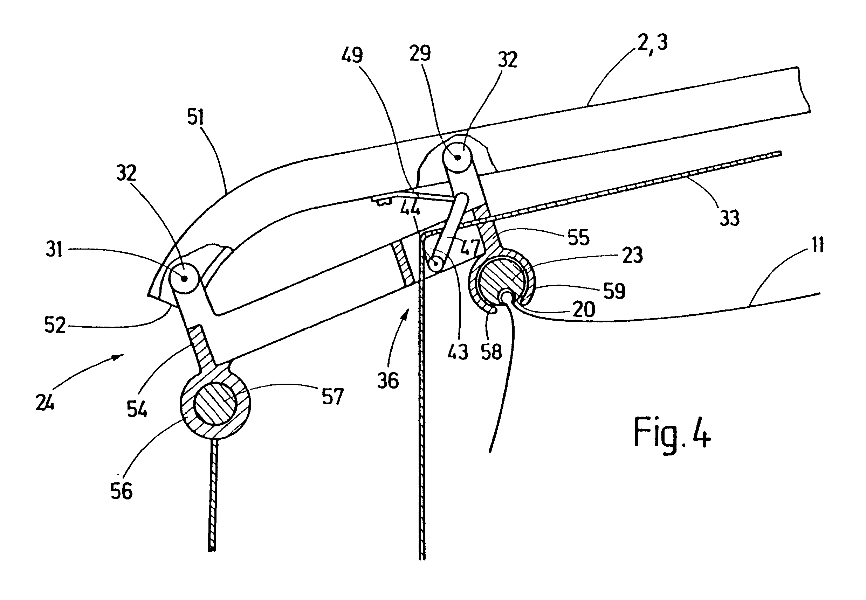

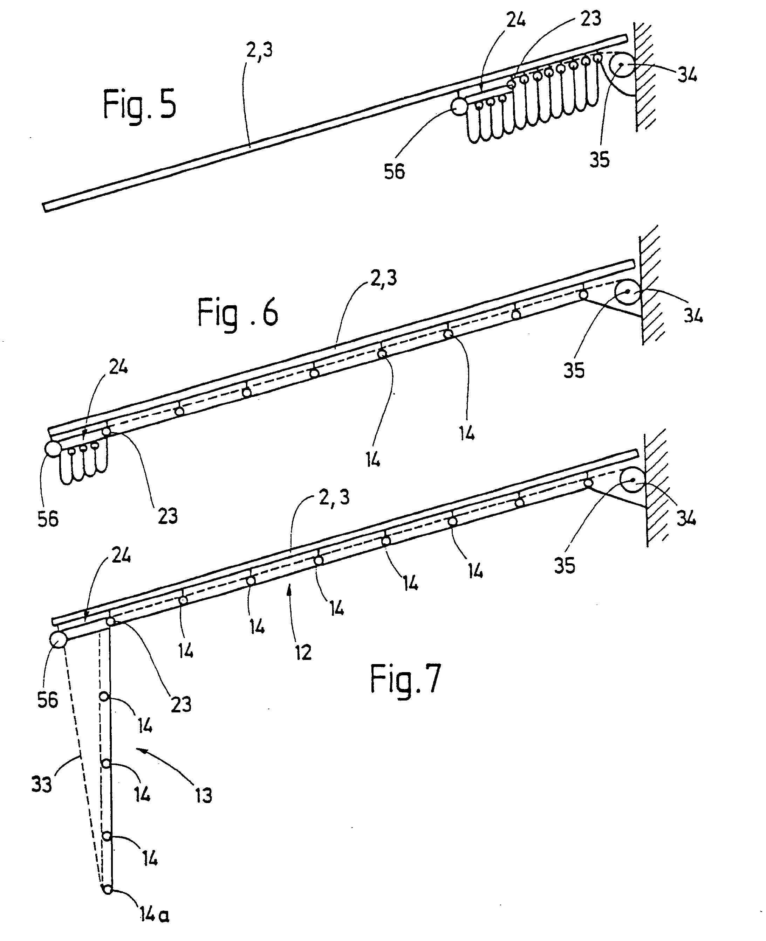

Bei dieser Art der Anbindung des Zuggurtes 33 an den Senkrechtbereich 13 hängen im aufgezogenen Zustand die einzelnen Tragschienen 14 dieses Bereiches übereinander auf den beiden Zuggurten 33. Die entstehenden Falten oder Schlaufen des Senkrechtbereiches 13 hängen dementsprechend gestaffelt unterschiedlich hoch und anders gepackt als die Schlaufen des eingefahrenen Schrägbereiches 12. Wenn ein ebenmäßigeres Erscheinungsbild der einzelnen Falten des Raffvorhangs 11 im eingefahrenen Zustand gewünscht ist, muß der mit der Tragschiene 23 verbundene Laufwagen 24 eine Gestalt entsprechend Fig. 4 bekommen. Die beiden Zuggurte 33 sind dann ähnlich einem Flaschenzug mit dem Laufwagen 24 verbunden, wie sich dies aus den Fig. 5 bis 7 ergibt, in denen der Zuggurt 33 als gestrichelte Linie eingezeichnet ist. Der Laufwagen 24 nach Fig. 4 besitzt einen Rahmen aus zwei parallel zueinander verlaufenden Flanschen 53, die sich in Längsrichtung der Laufschienen 2 und 3 erstrecken und voneinander einen Abstand entsprechend der Breite des zugehörigen Zuggurtes 33 aufweisen. Die beiden Flansche 53 sind an ihrem vorderen und an ihrem hinteren Ende durch einstückig angeformte Stege 54 und 55 miteinander verbunden. Im Bereich des vorderen Steges 54 ist ein Auge 56 angeformt, durch den eine als Beschwerung oder Gewicht dienende Rundstange 57 hindurchführt. Der hintere Steg 55 trägt an seiner Unterkante zwei klauenartig aufeinander zu gebogene Schenkel 58 und 59, zwischen denen, ähnlich wie bei den Stegen 17, die Tragschiene 23 gehaltert ist. Die Tragschiene 23 wird von den beiden Schenkeln 58 und 59 bis auf ein schmales Stück im Bereich der Keep 20 umgriffen, so daß die Anbringung des Raffvorhangs 11 an der Tragschiene 23 nicht behindert ist. Die Sperreinrichtung 36, die im übrigen in ähnlicher Weise ausgebildet ist wie die Sperreinrichtung 36 nach den Fig. 2 und 3, sitzt in der Nähe des hinteren Steges 55 und besteht wiederum aus dem einstückig zwischen den Flanschen 53 angeformten Steg 39, dem zwischen den beiden Flanschen 53 schwenkbar gelagerten Klemmnocken 43 sowie dem Betätigungshebel 47, der einstückig mit dem auf der Achse 44 schwenkbar gelagerten Klemmnocken 43 ist.

Der Abstand, den die Klemmeinrichtung 36 von dem an dem vorderen Steg 54 angeformten Auge 56 hat, entspricht der Summe der Durchmesser aller Tragschienen 14, die sich in dem Senkrechtbereich 13 befinden.

Abweichend von dem vorher erläuterten Ausführungsbeispiel sind die Zuggurte 33 nicht an der untersten Tragschiene 14a des Senkrechtbereiches 13 befestigt, sondern sie laufen dort durch eine Führungsöse, ähnlich der Führungsöse 37 nach Fig. 3, durch, um auf der Rückseite des Senkrechtbereiches 13 erneut nach oben aufzusteigen. Das freie Ende der Zuggurte 33 ist an dem zugehörigen Laufwagen 24 im Bereich des vorderen Steges 54 beispielsweise an dem Auge 56 oder der Beschwerungsstange 57 befestigt. Den Verlauf der Zuggurte 33 im ausgefahrenen Zustand der Schrägmarkise 1 veranschaulicht Fig. 7.

Da die Laufwägen 24 an weit voneinander entfernt liegenden Stellen entsprechend den Abständen der Stege 54 und 55 voneinander mit den Laufrollen 32 versehen sind, können sie in den Laufschienen 2, 3 praktisch nicht um eine Querachse kippen.

Wenn bei dieser Ausführungsform, ausgehend von der in Fig. 7 gezeigten Stellung, die Zuggurte 33 auf die zugehörigen Wickelrollen 35 aufgewickelt werden, verkürzt sich die hinter dem Senkrechtbereich 13 von dem jeweiligen Zuggurt 33 gebildete Schlaufe, weshalb entsprechend die untere Tragschiene 14a angehoben wird. Dabei gleiten die Zuggurte 33 durch die Führungsösen 37 der darüber befindlichen Tragschienen 14 nach oben. Sobald der Zuggurt 33 so weit eingefahren ist, daß die Tragschiene 14a an die darüber befindliche Tragschiene 14 anstößt, wird in der Folge auch diese nach oben mitgenommen und der Raffvorhang 11 wird zwischen den Tragschienen 14 in entsprechenden Falten nach unten hängen.

Sobald sämtliche Tragschienen 14 des Senkrechtbereiches 13 angehoben sind, werden die Zuggurte 33 zwischen ihrer Befestigungsstelle an dem Auge 56 und der auf etwas größerer Höhe gelegenen Verriegelungseinrichtung 36, durch die die Zuggurte 33, wie vorher beschrieben, hindurchlaufen, weitgehend gespannt. Die Tragschienen 14 des Senkrechtbereiches 13 werden deswegen mit ihren Ösen 37 etwa auf gleicher Höhe unterhalb der beiden Laufwägen 24 nebeneinander hängen. Dieser Zustand ist in Fig. 6 dargestellt.

Beim weiteren Aufrollen der beiden Zuggurte 33 werden schließlich die Laufwägen 24 mit ihren vorderen Rollen 32 aus dem Bogen 51 freikommen und in Richtung auf das rückwärtige Ende 4, 5 der Laufschienen 2, 3 gezogen werden. Die Endstellung ist in Fig. 5 gezeigt, aus der auch ersichtlich ist, daß nunmehr alle Falten, und zwar die des Schrägbereiches 12 als auch die des Senkrechtbereiches 13 mit gleichem Abstand nebeneinander und der gleichen Tiefe untereinander hängen ; entsprechend der vertikalen Erstreckung der Laufwägen 24 müssen die Abstände zwischen den Tragschienen 14 des Senkrechtbereiches 13 kürzer gewählt werden, um das Erscheinungsbild nach Fig. 5 zu erzeugen.

Im übrigen arbeitet die Verriegelungseinrichtung 36 bei der Ausführungsform nach den Fig. 4 bis 7 in der gleichen weise wie vorher anhand von Fig. 2 und 3 beschrieben.

Ersichtlich ist auch, daß dieselbe Wirkung erzielt werden kann, wenn die Verriegelungseinrichtung 36 im Bereich des vorderen Steges 54 und das Ende des Zuggurtes 33 an dem hinteren Steg 55 befestigt ist.

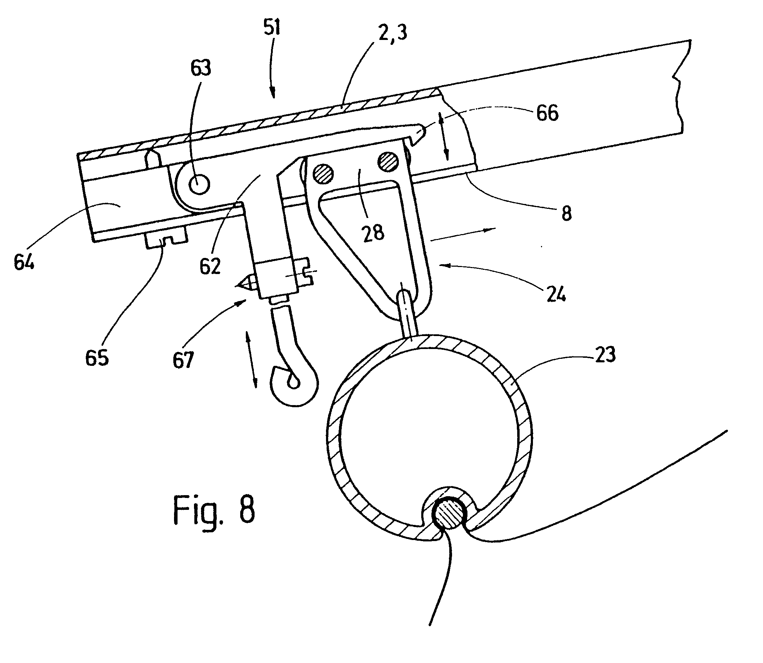

Die Haltevorrichtung in Gestalt des Bogens 51 erfordert zwar keine zusätzlichen beweglichen Teile, doch muß die Laufschiene 2 bzw. 3 an ihrem vorderen Ende 6, 7 entsprechend gekrümmt werden. Dies ist unter Umständen unerwünscht. In diesem Fall kann die Halteeinrichtung 51 nach Fig. 8 Verwendung finden. Diese Ausführungsform ist insbesondere dann vorteilhaft, wenn bei einem starken Gefälle der Laufschienen 2, 3 der Bogen 51 auch nicht zum Lösen der Sperreinrichtung 36 benötigt wird.

Die Halteeinrichtung 51 nach Fig. 8 besteht aus einem in der Laufschiene 2 bzw. 3 an deren vorderen Ende 6, 7 schwenkbar gelagerten einarmigen Hebel 62, der auf einem Achszapfen 63 eines Lagerbockes 64 schwenkbar ist. Der Lagerbock 64 steckt von dem vorderen Ende 6, 7 her in der Laufschiene 2, 3, so daß der Hebel 62 in Richtung auf das rückwärtige Ende der Laufschiene 2, 3 zeigt. Mit Hilfe einer Klemmschraube 65, die durch den Schlitz 8 der Laufschiene 2, 3 hindurchführt, ist der Lagerbock 64 in der Laufschiene 2, 3 festgeklemmt. Das freie Ende des einarmigen Hebels 63 trägt einen Haken 66 und ist dazu eingerichtet, mit der Hinterkante des Querbalkens 28 des Laufwagens 24 zusammenzuwirken, der in derselben Weise ausgebildet ist wie der Laufwagen 24 nach den Fig. 2 und 3. Die Teile des Laufwagens 24 sind deswegen nicht erneut beschrieben.

Die Betätigung des Hakens 66 erfolgt mittels eines nach unten aus dem Schlitz 8 herausragenden Betätigungsarmes 67, dessen unteres Ende 68 auf einer Höhe liegt, die von derjenigen Tragschiene 14 bei aufgezogenem Senkrechtbereich 13 eingenommen wird, die am höchsten liegt. Der Betätigungsarm 67 ist in der Nähe dies Achsbolzens 63 angebracht.

Da die Fig. 8 einen Schnitt zeigt zwischen der Laufschiene 2, 3 und der Sperrvorrichtung 36, ist diese, obzwar auf der Tragschiene 23 vorhanden, nicht erkennbar.

Beim Ausfahren der Schrägmarkise 1, die mit der Halteeinrichtung 51 nach Fig. 8 versehen ist, wird, sobald der Schrägbereich 12 vollständig entfaltet ist, der Laufwagen 24 unter dem Haken 66 vorbeigelaufen sein. Ein weiteres Fahren des Laufwagens 24 wird von der Halteeinrichtung 51 verhindert, weshalb beim Abwickeln der Zuggurte 33 der Senkrechtbereich 13 ausgefaltet wird. Beim Einfalten dagegen kann der Laufwagen 24 von den Zuggurten 33 nicht zurückgezogen werden, weil sich der Haken 66 an der Hinterkante der Querstrebe 28 des Laufwagens 24 verhängt. Erst, wenn der Senkrechtbereich 13 so weit eingefahren ist, bis dessen oberste Tragschiene 14 den Betätigungsarm 68 anhebt, kommt der Haken 66 von dem Laufwagen 24 frei, der nun in Richtung auf das rückwärtige Ende 3, 4 der Laufschiene 2, 3 sich bewegen kann.

Wahlweise kann mit der Halteeinrichtung 51 nach Fig. 8 auch ein Laufwagen entsprechend den Fig. 4 bis 7 Anwendung finden. Im übrigen ist die Wirkung der Sperrvorrichtung 36 wiederum wie vorher beschrieben.

Im Zusammenhang mit den Figuren ist eine Schrägmarkise 1 mit lediglich zwei Laufschienen dargestellt. Es versteht sich jedoch, daß auch mehr als zwei Laufschienen Anwendung finden können und die Zahl der Zuggurte entsprechend der Zahl der Laufschienen gewählt werden kann. Es sollten jedoch wenigstens zwei Zuggurte vorhanden sein. Für die weiteren die Zahl zwei übersteigenden Zuggurte können dann entsprechende zusätzliche Sperreinrichtungen und Halteeinrichtungen für die entsprechenden Laufwägen vorgesehen sein.

**Ansprüche**

1. Schrägmarkise (1), insbesondere zur Innenbeschattung, mit wenigstens zwei im Abstand voneinander und parallel zueinander verlaufenden Laufschienen (2, 3), die von ihrem rückwärtigen Ende (4, 5) ausgehend ein Gefälle aufweisen, mit einem Raffvorhang (11), der an einer Vielzahl von voneinander beabstandeten Stellen an Tragschienen (14, 14a, 23) befestigt ist, die zumindest endseitig mit in den Laufschienen (2, 3) laufenden und ihnen zugeordneten Laufelementen (22, 32) verbunden sind, und mit einer Antriebseinrichtung für den Raffvorhang (11), die biegsame, mit einer Vorderkante des Raffvorhangs (11) verbundene Zugmittel (33) sowie im Bereich der rückwärtigen Enden der Laufschienen drehbar gelagerte Betätigungseinrichtungen (34) zum Einziehen und Ausfahren der Zugmittel (33) aufweist, wobei der Raffvorhang (11) bei vollständig ausgefahrener Schrägmarkise (1) einen schräg verlaufenden und einen daran sich anschließenden, von dem rückwärtigen Ende der Laufschienen abliegenden vertikalen Bereich (12, 13) aufweist, dadurch gekennzeichnet, daß die Laufschienen (2, 3) sich im wesentlichen lediglich längs dem schräg verlaufenden Bereich (12) erstrecken und der vertikale Bereich (13) frei von Laufschienen ist, und daß dem Raffvorhang (11) am Übergang zwischen dem vertikalen und dem schrägen Bereich (12, 13) wenigstens eine Verriegelungseinrichtung (36) für ein Zugmittel (33) zugeordnet ist, die mit einer an dem vorderen Ende (6, 7) wenigstens einer der Laufschienen (2, 3) angeordneten Auslöseeinrichtung (49) im Sinne eines Freigebens des einen Zugmittels (33) bei über den schrägen Bereich (12) ausgefahrenem Raffvorhang (11) zusammenwirkt.

2. Schrägmarkise nach Anspruch 1, dadurch gekennzeichnet, daß wenigstens zwei im Bereich der seitlichen Kanten des Raffvorhangs (11) verlaufende Zugmittel (33) sowie zwei Verriegelungseinrichtungen (36) vorgesehen sind.

3. Schrägmarkise nach Anspruch 1, dadurch gekennzeichnet, daß die Verriegelungseinrichtung (36) eine reibschlüssig wirkende Einrichtung ist.

4. Schrägmarkise nach Anspruch 3, dadurch gekennzeichnet, daß die Verriegelungseinrichtung (36) für das Zugmittel (33) eine unbeweglich gehalterte sowie eine beweglich gehalterte Klemmfläche (45, 46) aufweist, zwischen denen das Zugmittel (33) hindurch verläuft und daß die beweglich gehalterte Klemmfläche (46) an einem von einer Lagerstelle (44) nach oben sich wegerstreckenden schwenkbaren Hebel (47) oberhalb der Lagerstelle sitzt.

5. Schrägmarkise nach Anspruch 4, dadurch gekennzeichnet, daß sich die unbewegliche Klemmfläche (45) von dem rückwärtigen Ende (4, 5) der Laufschienen (2, 3) her gesehen hinter der Lagerstelle (44) des Schwenkhebels (47) befindet.

6. Schrägmarkise nach Anspruch 1, dadurch gekennzeichnet, daß die Verriegelungseinrichtung (36) derjenigen Tragschiene (23) zugeordnet ist, die sich bei ausgefahrenem Raffvorhang (11) am Übergang zwischen dem schrägen und dem vertikalen Bereich (12, 13) befindet.

7. Schrägmarkise nach Anspruch 1, dadurch gekennzeichnet, daß die Zugmittel (33) in dem den vertikalen Bereich (13) bildenden Bereich des Raffvorhangs (11) durch regelmäßig im Abstand verteilte Führungsglieder (37) laufen.

8. Schrägmarkise nach Anspruch 1, dadurch gekennzeichnet, daß die Zugmittel (33) mit ihren freien Enden an der Vorderkante (14a) des Raffvorhangs (11) befestigt sind.

9. Schrägmarkise nach Anspruch 6, dadurch gekennzeichnet, daß die freien Enden der Zugmittel (33) mit der in dem Übergang zwischen dem schräg verlaufenden und dem vertikalen Bereich (12, 13) befindlichen Tragschiene (23) mittelbar oder unmittelbar verbunden sind, von dort frei zu der Vorderkante des Raffvorhangs (11) und von der Vorderkante des Raffvorhangs (11) durch die regelmäßig verteilten Führungsglieder (37) zurück zu der in dem Übergangsbereich befindlichen Tragschiene (23) verlaufen, von wo aus sie sich bis zu der Betätigungseinrichtung (34) erstrecken.

10. Schrägmarkise nach Anspruch 9, dadurch gekennzeichnet, daß der Abstand zwischen der Befestigungsstelle (56) des Zugmittels (33) an der Tragschiene (23) und der Umlenkstelle an der Tragschiene (23) dem Paket aus Tragschienen (14, 14a) des vertikalen Bereiches (13) entspricht.

11. Schrägmarkise nach Anspruch 6, dadurch gekennzeichnet, daß die Führungsglieder (37) an mit dem Raffvorhang (11) verbundenen Tragschienen (14, 14a) sitzen, die frei von Laufrollen sind.

12. Schrägmarkise nach Anspruch 1, dadurch gekennzeichnet, daß der in dem Übergang zwischen dem schräg verlaufenden und dem vertikalen Bereich (12, 13) des Raffvorhangs (11) angeordneten Tragschiene (23) ein Gewicht (23, 57) zugeordnet ist.

13. Schrägmarkise nach Anspruch 11, dadurch gekennzeichnet, daß das Gewicht von der Tragschiene (23) selbst gebildet ist.

14. Schrägmarkise nach Anspruch 1, dadurch gekennzeichnet, daß in dem vorderen Ende (6, 7) zumindest einer der Laufschienen (2, 3), vorzugsweise in den vorderen Enden sämtlicher Laufschienen (2, 3) eine Halteeinrichtung (51) für die in dem Übergang zwischen dem schräg verlaufenden und dem vertikalen Bereich (12, 13) befindliche Tragschiene (23) angeordnet ist.

15. Schrägmarkise nach Anspruch 12, dadurch gekennzeichnet, daß die Halteeinrichtung (51) mit den Rollen (32) dieser Tragschiene (23) zusammenwirkt.

16. Schrägmarkise nach Anspruch 12, dadurch gekennzeichnet, daß die Rollen (32) dieser Tragschiene (23) an einem Laufwagen (24) sitzen und die Halteeinrichtung (51) mit dem Laufwagen (24) zusammenwirkt.

17. Schrägmarkise nach Anspruch 12, dadurch gekennzeichnet, daß die Halteeinrichtung von einem nach abwärts gekrümmten Abschnitt (51) der jeweiligen Laufschiene (2, 3) gebildet ist, in den die Rollen (32) der entsprechenden Tragschienen (23) einlaufen.

18. Schrägmarkise nach Anspruch 12, dadurch gekennzeichnet, daß die Halteeinrichtung (51) von einem in dem vorderen Bereich (6, 7) der entsprechenden Laufschiene (2, 3) schwenkbar gelagerten Haken (66) gebildet ist, der durch den Raffvorhang (11) im Sinne eines Freigebens der Rolle (32) bzw. des Laufwagens (24) bzw. der Tragschiene (14) betätigbar ist.

## Claims

1. Inclined awning (1), in particular for inside shading, including at least two guide rails (2, 3) extending in parallel, spaced relation to each other and slanting downwards from their rear end (4, 5), a gathered curtain (11) which is attached at a plurality of spaced points to carrying struts (14, 14a, 23) which are connected at least at the ends to runner elements (22, 32) running in said guide rails (2, 3) and associated with these, and drive means for said gathered curtain (11) having flexible pull means (33) connected to a front edge of said gathered curtain (11) and actuating means (34) rotatably mounted in the region of said rear ends of said guide rails for pulling in and out said pull means (33), said gathered curtain (11) having an inclined region (12) and an adjoining vertical region (13) remote from said rear end of said guide rails when said inclined awning (1) is fully extended, characterized in that said guide rails (2, 3) extend essentially only along said inclined region (12) and said vertical region (13) is free of guide rails, and in that there is associated with said gathered curtain (11) at the transition between said vertical and inclined regions (12, 13) at least one locking device (36) for a pull means (33) which cooperates with a releasing device (49) arranged at the front end (6, 7) of at least one of said guide rails (2, 3) to release the one pull means (33) when said gathered curtain (11) is extended over said inclined region (12).

2. Inclined awning as defined in claim 1, characterized in that at least two pull means (33) extending in the region of the side edges of said gathered curtain (11) and two locking devices (36) are provided.

3. Inclined awning as defined in claim 1, characterized in that said locking device (36) is a device which acts in a frictionally acting manner.

4. Inclined awning as defined in claim 3, characterized in that said locking device (36) has for said pull means (33) an immovably held clamping surface (45) and a movably held clamping surface (46) with said pull means (33) passing through between these, and in that said movably held clamping surface (46) sits above a bearing point (44) on a pivotable lever (47) extending upwards away from said bearing point (44).

5. Inclined awning as defined in claim 4, characterized in that said immovable clamping surface (45) is located behind said bearing point (44) of said pivotable lever (47), seen from said rear end (4, 5) of said runners (2, 3).

6. Inclined awning as defined in claim 1, characterized in that said locking device (36) is associated with that carrying strut (23) which is located at the transition between said inclined and vertical regions (12, 13) when said gathered curtain (11) is extended.

7. Inclined awning as defined in claim 1, characterized in that said pull means (33) in said region of said gathered curtain (11) forming said vertical region (13) run through guide members (37) distributed at regular spacings.

8. Inclined awning as defined in claim 1, characterized in that said pull means (33) are attached with their free ends to the front edge (14a) of said gathered curtain (11).

9. Inclined awning as defined in claim 6, characterized in that the free ends of said pull means (33) are directly or indirectly connected to said carrying strut (23) located at the transition between said inclined and vertical regions (12, 13), extend freely from there to said front edge of said gathered curtain (11) and from said front edge of said gathered curtain (11) through said regularly distributed guide members (37) back to said carrying strut (23) located in the transition region and from there to said actuating device (34).

10. Inclined awning as defined in claim 9, characterized in that the spacing between the attachment point (56) of said pull means (33) on said carrying strut (23) and the deflection point on said carrying strut (23) corresponds to the set of carrying rails (14, 14a) of said vertical region (13).

11. Inclined awning as defined in claim 6, characterized in that said guide members (37) sit on carrying struts (14, 14a) which are connected to said gathered curtain (11) and are free of rollers.

12. Inclined awning as defined in claim 1, characterized in that a weight (23, 57) is associated with said carrying strut (23) arranged at the transition between said inclined and vertical regions (12, 13) of said gathered curtain (11).

13. Inclined awning as defined in claim 11, characterized in that said weight is formed by said carrying rail (23) itself.

14. Inclined awning as defined in claim 1, characterized in that a holding device (51) for said carrying strut (23) located at the transition between said inclined and vertical regions (12, 13) is arranged in the front end (6, 7) of at least one of said guide rails (2, 3) preferably in the front ends of all guide rails (2, 3).

15. Inclined awning as defined in claim 12, characterized in that said holding device (51) cooperates with said rollers (32) of this carrying strut (23).

16. Inclined awning as defined in claim 12, characterized in that said rollers (32) of this carrying strut (23) sit on a runner carriage (24) and said holding device (51) cooperates with said runner carriage (24).

17. Inclined awning as defined in claim 12, characterized in that said holding device is formed by a downwardly curved section (51) of the respective guide rail (2, 3) into which said rollers (32) of the corresponding carrying strut (23) run.

18. Inclined awning as defined in claim 12, characterized in that said holding device (51) is formed by a hook (66) which is pivotably mounted in said front region (6, 7) of the corresponding guide rail (2, 3) and is actuatable by said gathering curtain (11) to release said roller (32), said runner carriage (24) and said carrying strut (14), respectively.

## Revendications

1. Store oblique (1), notamment pour la production d'une ombre intérieure, comportant au moins deux rails de roulement (2, 3) distants l'un de l'autre et parallèles entre eux, qui présentent une pente à partir de leurs extrémités arrière (4, 5), un rideau repliable (11), fixé en une pluralité de points distants les uns des autres sur des rails supports (14, 14a, 23) qui sont reliés, aux extrémités au moins, à des éléments porteurs (22, 32) associés se déplaçant dans les rails de roulement (2, 3), et un dispositif d'entraînement pour le rideau (11), qui présente des moyens de traction flexibles (33) reliés à un bord avant du rideau (11), ainsi qu'au niveau des extrémités arrière des rails de roulement, des moyens de commande (34) montés mobiles en rotation permettant de rentrer et de sortir les moyens de traction (33), le rideau (11) comportant lorsque le store (1) est complètement sorti une section oblique suivie d'une section verticale (12, 13) éloignées des extrémités arrière des rails de roulement, *caractérisé* en ce que les rails de roulement (2, 3) sont situés essentiellement le long de la section oblique (12) et la section verticale (13) ne comporte pas de rails de roulement, et qu'au moins un dispositif de verrouillage (36) pour un moyen de traction (33) est associé au rideau (11) au point de raccordement entre la section verticale et la section oblique (12, 13), le dispositif de verrouillage coopérant avec un dispositif de déclenchement (49) disposé à l'extrémité avant (6, 7) d'au moins l'un des rails de guidage (2, 3) pour libérer ledit moyen de traction (33) lorsque le rideau (11) est déplié sur la section oblique (12).

2. Store oblique selon la revendication 1, *caractérisé* en ce qu'il est prévu au moins deux moyens de traction (33) dans la zone des bords latéraux du rideau (11) ainsi que deux dispositifs de verrouillage (36).

3. Store oblique selon la revendication 1, *caractérisé* en ce que le dispositif de verrouillage (36) est un dispositif agissant par friction.

4. Store oblique selon la revendication 3, *caractérisé* en ce que le dispositif de verrouillage (36) pour le moyen de traction (33) présente une surface de blocage fixe et une surface de blocage mobile (45, 46) entre lesquelles passe le moyen de traction (33) et que la surface de blocage mobile (46) est située sur un levier (47) mobile en rotation qui s'étend vers le haut à partir d'un palier (44), au-dessus du point d'articulation.

5. Store oblique selon la revendication 4, *caractérisé* en ce que la surface de blocage fixe (45) est située après le palier (44) du levier oscillant (47) vu à partir de l'extrémité arrière (4, 5) des rails de roulement (2, 3).

6. Store oblique selon la revendication 1, *caractérisé* en ce que le dispositif de verrouillage (36) est associé au rail support (23) qui se trouve au point de raccordement entre la section oblique et la section verticale (12, 13) lorsque le rideau (11) est sorti.

7. Store oblique selon la revendication 1, *caractérisé* en ce que les moyens de traction (33) passent dans des éléments de guidage (37) disposés à distances régulières dans la partie du rideau (11) formant la section verticale (13).

8. Store oblique selon la revendication 1, *caractérisé* en ce que les moyens de traction (33) sont fixés par leurs extrémités libres au bord avant (14a) du rideau (11).

9. Store oblique selon la revendication 6, *caractérisé* en ce que les extrémités libres des moyens de traction (33) sont reliées directement ou indirectement avec le rail support se trouvant au raccordement entre la section oblique et la section verticale (12, 13), et de là vont librement jusqu'au bord avant du rideau (11) et reviennent du bord avant du rideau (11) en passant par les éléments de guidage (37) répartis uniformément au rail support (23) situé dans la zone de raccordement, et de là s'étendent jusqu'au dispositif de commande (34).

10. Store oblique selon la revendication 9, *caractérisé* en ce que la distance entre le point de fixation (56) du moyen de traction (33) sur le rail support (23) et le point de déviation sur le rail support (23) correspond au paquet de rails supports (14, 14a) de la section verticale 13.

11. Store oblique selon la revendication 6, *caractérisé* en ce que les éléments de guidage (37) sont placés sur des rails supports (14, 14a) reliés au rideau (11) et ne comportant pas de galets de roulement.

12. Store oblique selon la revendication 1, *caractérisé* en ce que un poids (23, 57) est associé au rail support (23) au niveau du raccordement entre la section oblique et la section verticale (12, 13) du rideau (11).

13. Store oblique selon la revendication 11, *caractérisé* en ce que le poids est constitué par le rail support (23) lui-même.

14. Store oblique selon la revendication 1, *caractérisé* en ce qu'à l'extrémité avant (6, 7) d'au moins l'un des rails de roulement (2, 3) de préférence à l'extrémité avant de tous les rails de roulement (2, 3), il est prévu un dispositif de retenue (51) pour le rail support (23) situé au niveau du raccordement entre la section oblique et la section verticale (12, 13).

15. Store oblique selon la revendication 12, *caractérisé* en ce que le dispositif de retenue (51) coopère avec les galets (32) du rail support (23).

16. Store oblique selon la revendication 12, *caractérisé* en ce que les galets (32) du rail support (23) sont situés sur un chariot (24) et le dispositif de retenue (51) coopère avec le chariot (24).

17. Store oblique selon la revendication 12, *caractérisé* en ce que le dispositif de retenue est constitué par une section recourbée vers le bas (51) des rails de roulement correspondants (2, 3) dans laquelle les galets (32) du rail support (23) s'engagent.

18. Store oblique selon la revendication 12, *caractérisé* en ce que le dispositif de retenue (51) est forme par un crochet mobile en rotation (66) placé à l'extrémité avant (6, 7) des rails de roulement (2, 3) qui peut être commandé par le rideau (11) dans le sens d'une libération des galets (32), voire du chariot (24), voire du rail support (14).

Fig. 1

Fig. 2

Fig. 3

Fig. 4

EP 0 322 534 B1

Fig. 5

Fig . 6

Fig.7

Fig. 8

17